# EUROPÄISCHE PATENTSCHRIFT

(11) **EP 2 059 477 B1**
(45) Veröffentlichungstag und Bekanntmachung des Hinweises auf die Patenterteilung: **18.11.2015**
(21) Anmeldenummer: 07802221.7
(22) Anmeldetag: 07.09.2007
(51) Int. Cl.: C01B 13/34, C01G 45/00, B01J 23/34

(54) **VERFAHREN ZUR HERSTELLUNG NANOKRISTALLINER GEMISCHTER METALLOXIDE**
PROCESS FOR PREPARING NANOCRYSTALLINE MIXED METAL OXIDES
PROCÉDÉ DE PRODUCTION D'OXYDES MÉTALLIQUES MIXTES NANOCRISTALLINS

(30) Priorität: 07.09.2006 DE 102006042013
(43) Veröffentlichungstag der Anmeldung: 20.05.2009
(73) Patentinhaber: IBU-tec advanced materials AG, 99425 Weimar (DE)
(72) Erfinder: WÖLK, Hans-Jörg, 83022 Rosenheim (DE)
(74) Vertreter: Finger, Catrin
(86) Internationale Anmeldenummer: PCT/EP2007/007841
(87) Internationale Veröffentlichungsnummer: WO 2008/028681

(56) Entgegenhaltungen:
- EP-A1- 1 227 139
- WO-A-2004/005184
- WO-A-2005/070819
- WO-A-2005/087660
- WO-A2-02/072471
- WO-A2-2006/027270
- US-A1- 2005 152 832
- DATABASE WPI Week 200581 Derwent Publications Ltd., London, GB; AN 2005-790994 XP002420005 & JP 2005 320189 A (DAIICHI KOGYO SEIYAKU CO LTD) 17. November 2005 (2005-11-17)

## Beschreibung

Die vorliegende Erfindung betrifft ein Verfahren zur Herstellung von nanokristallinen gemischten Metalloxiden, nanokristalline gemischte Metalloxide hergestellt nach dem erfindungsgemäßen Verfahren sowie deren Verwendung als Katalysatoren, insbesondere bei der Herstellung von Methanol aus Kohlenmonoxid und Wasserstoff und bei der Oxidation von Kohlenmonoxid.

Metalloxide, insbesondere gemischte Metalloxide, finden ein immer größeres Anwendungsgebiet, insbesondere in Keramiken, Polymeradditiven, Füllstoffen, Pigmenten, reaktiven Oberflächen und Katalysatoren, etc.

Darüber hinaus weisen beispielsweise Kupferoxide mit Perowskitstruktur bei erstaunlich hohen Temperaturen Phasenübergänge zu Supraleitern auf und sind daher Gegenstand zahlreicher Untersuchungen. Dies trifft insbesondere auf die Klassen der Lanthanstrontium-Cuprate, beispielsweise La₂₋ₓSrₓCuO₄ oder auf Yttriumbariumcuprate, wie beispielsweise YBa₂Cu₃O_{7-Δ} zu.

Typische Vertreter dieser Verbindungsklassen sind beispielsweise die sogenannten Titanate, Zirkonate und Hafniate, die insbesondere in die Klassen der Orthotitanate M₂^{II}TiO₄ und Metatitanate M^{II}TiO₃ eingeteilt werden.

Diese Verbindungen weisen allerdings fast nie die diskreten Ionen [TiO4]⁴⁻ und [TiO3]²⁻ auf, analog den Phosphaten oder Sulfiten. Die Strukturen dieser gemischten Metalloxide bestehen aus dreidimensionalen Ionenanordnungen, die besonders interessant sind.

Ist M^{II} von vergleichbarer Größe wie Ti^{IV}, beispielsweise im Falle von M = Mg, Mn, Fe, Co, Ni, dann liegt die Struktur des Ilmenits, FeTiO₃, vor, die aus hexagonal dichtest gepackten Sauerstoffatomen aufgebaut ist, wobei ein Drittel der Oktaederlücken durch M^{II} und ein weiteres Drittel durch Ti^{IV} besetzt ist. Dies entspricht im Wesentlichen der so genannten Grundstruktur von Al₂O₃, mit dem Unterschied, dass in letzteren Fällen nur eine Sorte von Kationen vorliegt, die zwei Drittel der oktraedrischen Plätze besetzen.

Ist dagegen M^{II} erheblich größer als Ti^{IV} (beispielsweise M = Ca, Sr, Ba), so wird die Struktur des Perowskits, CaTiO₃, bevorzugt.

Perowskite kann man sich aufgebaut denken aus einer kubisch dichtesten Kugelpackung von Kalzium- und Sauerstoffatomen, in der erstere regelmäßig angeordnet sind und die Titanatome ausschließlich die von Sauerstoffatomen gebildeten Oktaederlücken besetzen, so dass sie sich so weit wie möglich von den Kalziumatomen entfernt aufhalten können. Durch die Größe des Ba^{II}-Ions wird das Perowskitgitter derart aufgeweitet, dass das Titanatom zu klein ist, um die Oktaederlücke auszufüllen. Hierdurch werden ferro- und piezoelektrische Eigenschaften hervorgerufen. Bariumtitanat wird beispielsweise bei der Herstellung von kompakten Kondensatoren aufgrund seiner hohen Dielektrizitätskonstante verwendet und bei keramischen Umwandlern bei Mikrofonen und Tonabnehmern.

Die Verbindungen M₂^{II}TiO₄ (m = Ng, Zn, Mn, Fe, Co) nehmen die so genannte Spinellstruktur des MgAl₂O₄ ein. Dies ist der dritte wichtige Strukturtyp, der von vielen gemischten Metalloxiden bevorzugt wird. Hierbei besetzen die Kationen sowohl oktraedrische als auch tetraedrische Lücken in einer kubisch dichtesten Kugelpackungsanordnung der Oxidionen.

Derartige gemischte Metalloxide, insbesondere beispielsweise Perowskite, finden auch Verwendung als Katalysatoren, beispielsweise im Bereich von Abgaskatalysatoren in Automobilen, bei der Herstellung von Fotokatalysatoren und für die Herstellung von oxidischen Katalysatoren, insbesondere für die Herstellung von Methanol und die Oxidation von Kohlenmonoxid. Hierbei beeinflusst der Prozess der Kalzinierung der Ausgangsmaterialien während des Herstellungsverfahrens wesentlich die Qualität der Endkatalysatoren und damit auch deren Einsatzmöglichkeiten in der Katalyse. (siehe Zuhlke, Dissertation, TH Karlsruhe 1999)

Die gezielte Steuerung des Kristallisationsprozesses kann durch die Zusammensetzung des/der Edukte beeinflusst werden. Ein wichtiger Faktor ist hierbei, insbesondere beim Einsatz in der Katalyse, die Kristallitgröße (R. Schlögel et al., Angewandte Chemie 116, 1628-1637, 2004).

Dabei werden immer mehr auch nanokristalline "Pulver" in Betracht gezogen, trotz der zumeist ungelöst gebliebenen Herstellungsprobleme.

Derartige nanokristalline gemischte Oxidpulver werden üblicherweise bislang entweder durch (nass-)chemische Synthese, durch mechanische Verfahren oder durch so genannte thermophysikalische Verfahren hergestellt.

Im Falle von Perowskiten werden mit den herkömmlichen bislang bekannten Verfahren dabei BET-Oberflächen von ca. 2 bis 10 m²/g erreicht.

Typischerweise wird bei der chemischen Synthese von nanokristallinen Pulvern ausgehend von so genannten Precursor-Verbindungen (Vorläuferverbindungen) durch chemische Reaktionen ein Pulver synthetisiert, beispielsweise mittels Hydroxidfällung, Synthese durch Hydrolyse metallorganischer Verbindungen und Hydrothermalverfahren. Die endgültige Struktur der Nanokristallite bildet sich, wie schon erwähnt, typischerweise erst nach bzw. während der Kalzination.

Mechanische Herstellungsverfahren sind durch intensives Mahlen inhomogener Partikel zu homogenen Partikeln charakterisiert, was oftmals auch zu unerwünschten Phasentransformationen bis hin zu amorphen Partikeln aufgrund des auf die Partikel ausgeübten Druckes führt.

Typischerweise liegen die dabei gebildeten Partikel nicht in einer gleichmäßig homogenen Größenverteilung vor. Außerdem besteht die Gefahr von Abrieb durch die Mahlwerkzeuge, um somit einer Kontamination der Produkte, was insbesondere beim Einsatz der so erhaltenen nanokristallinen gemischten Oxide im Bereich der Katalyse von Nachteil ist.

Thermophysikalische Methoden sind beispielsweise in der WO 2004/005184 beschrieben. Diese beruhen auf der Einbringung thermischer Energie zu festen, flüssigen oder gasförmigen Ausgangsverbindungen. Die vorstehend erwähnte internationale Patentanmeldung betrifft das so genannte plasma-pyrolytische Sprayverfahren (PSP), bei dem die Ausgangsstoffe in einer Knallgasflamme versprüht und dabei zersetzt werden. Eine bevorzugte technische Anwendung dieser Technologie besteht bei der Herstellung von feinem kristallinem Siliziumdioxid, bei dem leicht flüchtige Organosiliziumverbindungen in einer Knallgasflamme versprüht werden.

Außerdem wurde bei der Synthese nanokristalliner Teilchen das so genannte Plasmasyntheseverfahren eingesetzt, bei dem die Ausgangsstoffe in einem bis zu 6000K heißem Plasma verdampft werden. Weitere übliche Verfahren des Standes der Technik sind beispielsweise CVD-Verfahren, bei dem gasförmige Edukte zur Reaktion gebracht werden, wobei dabei oft auch nicht oxidische Pulver entstehen bzw. gemischtoxidische Verbindungen mit verschiedenen kristallinen Phasen.

Die WO 02/072471 offenbart darüber hinaus ein Verfahren zur Herstellung eines einteiligen, multinären Metalloxidpulvers.

Die vorgenannten Verfahren des Standes der Technik weisen insbesondere Nachteile auf in Bezug auf das Vorliegen einer sehr breiten Partikelgrößenverteilung der Nanokristallite, unerwünschter Agglomerationen der nanokristallinen Partikel untereinander bzw. auch unvollständige Phasenumwandlungen, das heißt, das gewünschte Endprodukt wird oftmals nur zur 40 bis 70% im Endprodukt erhalten, was weitere Reinigungsschritte bzw. Umkristallisation erfordert.

Aufgabe der vorliegenden Erfindung war es daher, ein weiteres Verfahren zur Herstellung möglichst monomodal verteilter nanokristalliner gemischt oxidischer Pulver zur Verfügung zu stellen, das die vorgenannten Nachteile des Standes der Technik vermeidet, insbesondere das Auftreten von Phasenumwandlungen und Mischphasen bzw. unvollständige Reaktionen der Ausgangsprodukte sowie eine einstellbare nanokristalline Partikelgröße erzielt und des Weiteren Teilchen mit spezifischer großer innerer Oberfläche und mit definierter Kristallstruktur zur Verfügung stellt.

Diese Aufgabe wird erfindungsgemäß gelöst durch ein Verfahren zur Herstellung nanokristalliner gemischter Metalloxide aus mindestens zwei unterschiedlichen Ausgangsverbindungen, umfassend die Schritte
a) des Einbringens einer stöchiometrischen Mischung der Ausgangsverbindungen in eine Reaktionskammer mittels eines Trägerfluids,
b) des Unterwerfens der Ausgangsverbindung in einer Behandlungszone unter einem Puls in der Reaktionskammer unter eine pulsierend einwirkende thermische Behandlung,
c) des Bildens von nanokristallinen gemischten Metalloxidpartikeln,
d) des Ausbringens der in Schritt b) und c) erhaltenen nanokristallinen gemischten Metalloxidpartikel aus dem Reaktor,
wobei das Herstellen der Mischung der stöchiometrischen Mischung der Ausgangsverbindungen bei einer Temperatur von >50°C erfolgt.

Überraschenderweise wurde gefunden, dass durch eine Wärmebehandlung während des Mischens der stöchiometrischen Ausgangsverbindung besonders kleine Kristallite mit Partikelgrößen < 30 µm, besonders bevorzugt < 20 µm, ganz besonders bevorzugt < 10 µm und am meisten bevorzugt < 5 µm erhalten werden können. Perowskite Ilmenite und Spinelle liegen oftmals in einer so genannten Domänenstruktur vor, die durch eine entsprechende Wärmebehandlung gezielt beeinflusst werden kann, so dass Perowskite, Ilmenite oder Spinelle mit besonders guter Domänenstruktur in reiner Phase mit kleinen Kristallitgrößen erhalten werden können.

Es wurde festgestellt, dass ohne die Anwendung der Wärmebehandlung in dem erfindungsgemäßen Verfahren die Domänenstruktur mit den erhaltenen gemischten Oxide im Allgemeinen keine klaren Domänengrenzen aufweist und unsaubere Strukturen bzw. Mischphasen innerhalb der erhaltenen Produkte entstehen.

Somit kann durch das erfindungsgemäße Verfahren der Kristalisationsprozess gezielt gesteuert werden, hier insbesondere durch die weiteren Schritte auch die Größe der Kristallite und die Porengrößenverteilung der entsprechenden gemischten Metalloxide. Dies kann beispielsweise außerdem durch die Verweilzeit der Ausgangsmischung der Ausgangsverbindung in der Flamme bzw. durch die Reaktortemperatur weiter vorteilhaft beeinflusst werden. Durch die pulsierende thermische Behandlung werden die entstehenden nanokristallinen Partikel daran gehindert zu agglomerieren. Typischerweise werden die nanokristallinen Partikel sofort durch den Strom an heißem Gas in eine kältere Zone der Reaktionskammer bzw. des Reaktors überführt, wo Nanokristallite zum Teil mit Durchmessern von weniger als 20 Nanometern erhalten werden können. Dies führt bei den erfindungsgemäß erhaltenen gemischt oxidischen Nanokristalliten zu deutlich erhöhten BET-Oberflächen.

Beispielhaft wurde bei der Strukturgruppe der Perowskite gefunden, dass bei den bislang bekannten Syntheseverfahren für Perowskite ein BET-Oberfläche von ca. 2 bis 10 m²/g erhalten werden, wohingegen beim erfindungsgemäßen Verfahren Perowskitnanokristallite mit einer BET-Oberfläche von 100 bis 200 m²/g, bevorzugt von 150-200 m²/g, erhalten werden. Werte in diesem Bereich werden auch für Ilmenite und Spinelle, die mittels des erfindungsgemäßen Verfahrens hergestellt wurden, erhalten.

In einer bevorzugten Ausführungsform des erfindungsgemäßen Verfahrens wird zusätzlich Zitronensäure oder ein Zitronensäuresalz in die Mischung der Ausgangsverbindungen eingebracht. Alternativ zu Zitronensäure oder deren Derivaten kann beispielsweise auch Maleinsäure bzw. deren Derivate verwendet werden, da sowohl bei Zitronensäure und Maleinsäure bzw. auch deren Derivaten durch die Chelatbildung zwischen Metall und Säure eine besonders gute Fällung des Metallkomplexes erreicht wird. Außerdem erreicht man, insbesondere bei Verwendung von Zitronensäure und deren Derivaten, eine sehr feine Verteilung der resultierenden Metallkomplexe/Kristallite und ermöglichte damit während des Kalzinierens eine Umsetzung zu den komplexen Perowskitstrukturen mit sehr reinen Phasen.

Weitere Vorteile des erfindungsgemäßen Verfahrens bestehen darin, dass beispielsweise aus Suspensionen ohne zusätzliche Filtrations- und/oder Trocknungsschritte bzw. ohne Zugabe weiterer Lösungsmittel innerhalb eines kurzen Zeitraums, typischerweise innerhalb weniger Millisekunden bei vergleichsweise niedrigen Temperaturen von 300 bis 700°C kalziniert werden können. Die schonendere Kalzinierung verglichen mit herkömmlichen Verfahren, die typischerweise bei Temperaturen von mehr als 900°C durchgeführt werden, ermöglicht auch, dass die Phasenstruktur der erhaltenen Produkte so sauber ist, dass beispielsweise Yttriumbariumcuprate, die mit dem erfindungsgemäßen Verfahren erhalten werden, auch im Rahmen von optischen Analysemethoden als Substanzen optischer Wellenleiter verwendet werden können. Dies war bislang ein erstrebenswertes Ziel bisher bekannter Yttriumbariumcuprate, wurde jedoch bislang nur unzureichend verwirklicht (J. Kircher, Dissertation TH Karlsruhe 1992, Ellipsometrische Untersuchungen zum elektronischen Normalzustand der Yttriumbariumcuprate).

Die mittels des erfindungsgemäßen Verfahrens erhaltenen nanokristallinen gemischtoxidischen Verbindungen weisen signifikant erhöhte BET-Oberflächen auf, was im Falle des Einsatzes derartiger Gemischtoxide als aktive Materialien zu Katalysatoren mit erhöhter Reaktivität, verbessertem Umsatz und Selektivität führt. Die durch annähernd gleiche Verweilzeit jedes Partikels in dem durch das Verfahren erzeugten homogenen Temperaturfeldes entsteht ein äußerst homogenes Endprodukt mit einer engen monomodalen Teilchenverteilung der entstehenden gemischtoxidischen Nanokristallite.

Ebenso können die erfindungsgemäß erhaltenen Nanokristallite als Träger für andere Katalysatorsysteme, wie z. B. Ni, Pd/Pt etc. dienen, beispielsweise mittels des erfindungsgemäßen Verfahrens hergestelltes Magnesiumaluminat.

Eine Vorrichtung zur Durchführung des erfindungsgemäßen Verfahrens bei der Herstellung derartiger monomodaler nanokristallinem Gemischtmetalloxidpulver ist beispielsweise im Grundsatz in der DE-A-10109892 beschrieben. Im Gegensatz zu der dort beschriebenen Vorrichtung und dem dort offenbarten Verfahren benötigt das vorliegende Verfahren jedoch keinen vorläufigen Verdampfungsschritt, in dem flüchtige Ausgangsstoffe auf eine Verdampfungstemperatur erwärmt werden. Daher entfällt auch der in der DE-A-10109892 zwingend vorgelagerte Verdampfungsschritt bzw. der Vorrichtung das entsprechende Modul für die Verdampfung der Ausgangsstoffe. Die stöchiometrische Mischung der Ausgangsverbindungen wird in Form einer Lösung, Aufschlämmung, Suspension oder in festem Aggregatszustand in die Reaktionskammer eingebracht.

Typischerweise wird die Mischung, aus denen die erfindungsgemäßen Gemischtmetalloxidpulver hergestellt werden, direkt über ein Trägerfluid, insbesondere ein Trägergas, vorzugsweise ein inertes Trägergas , wie beispielsweise Stickstoff, etc. in die sogenannte Reaktionskammer, genauer gesagt in die Brennkammer, eingeführt, bevorzugt in verdüster Form.

Die Möglichkeit schon bei der Wahl der Ausgangsmaterialien die Stöchiometrie genauestens zu bestimmen, ist ein weiterer Vorteil des erfindungsgemäßen Verfahrens, das mit anderen Verfahren nur unzureichend erreicht werden kann.

An der Reaktionskammer ist abgasseitig ein Resonanzraum mit einem gegenüber der Reaktionskammer deutlich verringerten Strömungsquerschnitt angeschlossen. Der Brennkammerboden ist mit mehreren Ventilen zum Eintritt der Verbrennungsluft in die Brennkammer ausgestattet. Die aerodynamischen Ventile sind dabei strömungstechnisch und akustisch so mit der Brennkammer und der Resonanzrohrgeometrie abgestimmt, dass die in der Brennkammer erzeugten Druckwellen des homogenen flammenlosen Temperaturfeldes sich vorwiegend im Resonanzrohr pulsierend ausbreiten. Es bildet sich ein sogenannter Helmholzresonator mit pulsierender Strömung aus. Die Pulsation kann dabei regelmäßig oder unregelmäßig erfolgen.

Die Materialzuführung in die Reaktionskammer erfolgt typischerweise entweder mit einem Injektor oder mit einer geeigneten Zweistoffdüse und einem Schenkdosierer. Die erfindungsgemäß verwendeten Reaktoren haben typischerweise eine Nennleistung von 50-250 Kw. Als Brennstoff zur Erzeugung des pulsierenden thermischen Feldes wird beispielsweise Erdgas, Propan, Wasserstoff oder dergleichen verwendet. Die Temperatur kann dabei beispielsweise sogar auf 250°C erniedrigt werden, um die erfindungsgemäßen gemischtoxidischen nanokristallinen Pulver zu erhalten.

Typische Mengen beim Materialdurchsatz des erfindungsgemäßen Verfahrens liegen im Bereich bis zu 150 kg/Stunde eines Feststoffs bzw. Suspension der stöchiometrischen Mischung der Ausgangsverbindungen.

Die typische Verweilzeit im thermischen Behandlungsschritt beträgt 200 ms bis ca. 2 s und die erhaltene Kristallitgröße ca. 5 nm bis 100 µm, bevorzugt 5nm bis 30 µm, ganz besonders bevorzugt 10 nm bis 20 µm.

Das erfindungsgemäße Verfahren ermöglicht weiter somit die Herstellung monomodaler nanokristalliner Gemischtoxidpulver durch direkte Einbringung einer stöchiometrischen Mischung der entsprechenden Ausgangsverbindungen in den Reaktor. Überraschenderweise können beispielsweise auch trockene Gemischtoxidpulver oxidischer Ausgangsverbindungen direkt in die Brennkammer als stöchiometrische Mischung im Festzustand eingebracht werden, ohne dass die entstehenden kristallinen Materialien filtriert werden müssen. Weiterhin ermöglicht das erfindungsgemäße Verfahren eine geringere Temperatur bei der Herstellung der erfindungsgemäßen Gemischtmetalloxide als die bislang bekannten herkömmlichen Verfahren.

Darüber hinaus lässt sich beispielsweise im bevorzugten Falle der Verwendung von Lösungen, insbesondere von wässrigen Lösungen der Ausgangsprodukte ein weiterer Fällungsschritt vermeiden wie es üblicherweise bei der Hydroxidmethode nötig ist, so dass die Lösung direkt im Reaktor thermisch behandelt, d.h. kalziniert werden kann.

Bevorzugt ist das Trägerfluid ein Trägergas, wie beispielsweise Luft, Stickstoff bzw. Luft/Stickstoffgemische. Natürlich kann alternativ auch eine Flüssigkeit als Fluid verwendet werden bzw. auch schon die in Lösung vorliegenden Ausgangsverbindungen als Lösung selbst. Die Art des Trägerfluids hat insbesondere Einfluss auf die Verweilzeit in der Behandlungszone. So können beispielsweise auch Direktsuspensionen und Aufschlämmungen schwerlösliche Ausgangsverbindungen wie Sulfate, Oxide, Nitride, etc. erfindungsgemäß verwendet werden.

Bevorzugt wird die Ausgangsverbindung in verdüster Form in die Reaktionskammer eingebracht, so dass eine feine Verteilung im Bereich der Behandlungszone gewährleistet ist.

Durch Kontrolle der Pulsation (regelmäßig oder unregelmäßig bzw. über die Dauer und die Amplituden der pulsierenden thermischen Behandlungen) sowie der Verweilzeit der Ausgangsverbindungen in der Behandlungszone (typischerweise in einem Zeitraum von 200 ms bis 2 s) können auch die Kristallitgröße und deren Porosität entscheidend bestimmt werden.

Nach der thermischen Behandlung werden die entstandenen nanokristallinen Gemischtmetalloxide wenn möglich mittels des Trägerfluids sofort in eine kältere Zone der Reaktionskammer überführt, so dass sie dort in der kälteren Zone abgeschieden und ausgetragen werden können. Die Ausbeute des erfindungsgemäßen Verfahrens beträgt, berechnet auf die stöchiometrische Mischung der Ausgangsstoffe, nahezu 1%, da das entstehende feste Produkt nahezu vollständig aus dem Reaktor ausgetragen werden kann.

Wie vorstehend schon ausgeführt, wurde auch überraschenderweise gefunden, dass auch schon in fester Form vorliegende Oxide als Ausgangsstoffe verwendet werden können. Diese werden erfindungsgemäß durch die anschließende pulsierende Temperaturbehandlung sofort in nanokristalline Gemischtoxidteilchen umgewandelt. Dies öffnet in besonders vorteilhaften Weiterbildungen des erfindungsgemäßen Verfahrens einen besonders weiten Anwendungsbereich, da es nicht nötig ist, spezifische Ausgangsverbindungen, beispielsweise in Bezug auf ihre Löslichkeit, Flüchtigkeit, etc. auszuwählen, um zu bestimmen ob sie überhaupt im Rahmen eines Verfahrens eingesetzt werden können.

Ebenso ist es möglich, dass in weiteren bevorzugten Weiterbildungen des erfindungsgemäßen Verfahrens lösliche Metallverbindungen als Mischung der Ausgangsverbindungen eingesetzt werden. Dabei können insbesondere einfach zugängliche Ausgangsverbindungen der Metallnitrate, Chloride, Acetate, etc. von Metallen bzw. Übergangsmetallen eingesetzt werden.

Überraschenderweise wurde gefunden, dass die thermische Behandlung bei tiefen Temperaturen von 200°C bis 700°C, bevorzugt unterhalb von 700°C, beispielsweise 350°C bis 650°C durchgeführt werden kann, was gegenüber den bislang bekannten thermischen Zersetzungsverfahren, die üblicherweise bei Temperaturen von mehr als 1.000°C durchgeführt werden, von Vorteil ist.

Zersetzungs- und Nebenreaktionen, die zu Verunreinigung des Produktes bzw. zum Auftreten unerwünschter Mischphasen oder unerwünschter Phasen führen können, werden weiter durch das Anlegen eines Druckes von zwischen 15 bis 40°C noch weiter vermieden.

Die Aufgabe der vorliegenden Erfindung wird neben dem erfindungsgemäßen Verfahren auch durch das nanokristalline Metalloxidmateral erhältlich durch das erfindungsgemäße Verfahren gelöst.

Es wurde gefunden, dass das erfindungsgemäße nanokristalline Gemischtoxidmaterial bevorzugt eine Kristallitgröße im Bereich von 5 nm bis 100 µm, bevorzugt von 10 nm bis 10 µm aufweist, was wie vorstehend schon ausgeführt, unter anderem durch die Pulsation der thermischen Behandlung eingestellt werden kann.

In ganz bevorzugten Ausführungsformen ist das erfindungsgemäße kristalline Gemischtmetalloxidmaterial ein Material ausgewählt aus den Strukturklassen der Spinelle, Ilmenite und Perowskite, so dass sich ein weiterer Anwendungsbereich des erfindungsgemäßen Verfahrens bei der Synthese katalytisch wirksamer oder elektrisch leitender Materialien erschließt.

Das erfindungsgemäße Verfahren ist anhand der nachstehenden Ausführungsbeispiele, die nicht als einschränkend verstanden werden sollen, anhand der Figuren näher erläutert.

Die verwendete Vorrichtung entspricht weitgehend der in der DE-A-10109892 beschriebenen mit dem Unterschied, dass sie zur Durchführung des erfindungsgemäßen Verfahrens verwendete modifizierte Vorrichtung keine Verdampfervorstufe benötigt.
- Fig. 1: zeigt das Ergebnis eines CO-Oxidationstests mit einem nanokristallinen LaSrMnO₃-Material, das mittels des erfindungsgemäßen Verfahrens hergestellt wurde.
- Fig. 2: zeigt das Ergebnis einer Oxidation anhand mittels Hydroxidfällung hergestellten LaSrMnO₃.

### Beispiel 1

### Herstellung von LaMnO₃

2,5112 g Mn(NO₃)₂ x 4H₂O wurden mit 4,3302 g La(NO₃)₂ x 6H20 sowie 4,2028 g Zitronensäure in 30 ml Wasser bei einer Temperatur von 80°C gelöst und langsam weiter auf 150°C erwärmt.

Die entstehende viskose Lösung wurde anschließend in den vorstehend beschriebenen Reaktor mittels eines Schenkdosierers verdüst zugegeben. Die Verweilzeit der Lösung im Reaktor betrug ca. 700 ms. Die Temperatur wurde auf 270°C eingestellt.

Anschließend wurden 6,1 g LaMnO₃ (entspricht 95% Ausbeute) aus dem Reaktor ausgebracht, das eine BET Oberfläche von 175 m²/g aufweist.

### Beispiel 2

### Darstellung von La_{0,5}Sr_{0,5}MnO₃

Es wurden 1,07 g Sr(NO₃)₂, 2,60 g Mn(NO₃) x 4H₂O, 2,22 g La(NO₃)₂ x 6H₂O sowie 4,20 g Zitronensäure bei 80°C in 30 ml Wasser gelöst.

Die Lösung wurde wie in Beispiel 1 mittels eines Schenkdosierers in den Reaktor gegeben. Die Verweilzeit des Pulvers im Reaktor betrug ebenfalls ca. 700 ms und die Temperatur des Reaktors lag bei 200°C. Die Ausbeute von La_{0,5}Sr_{0,5}MnO₃ betrug 4, 5 g und die BET Oberfläche 185 m²/g.

### Beispiel 3

Das in Beispiel 2 erhaltene La_{0,5}Sr_{0,5}MnO₃ wurde bei der Oxidation von CO im Vergleich zu mittels Hydroxidfällung und anschließendem Kalzinieren hergestelltem La_{0,5}Sr_{0,5}MnO₃ getestet.

In einem Quarzglasreaktor wurden je 100 mg La_{0,5}Sr_{0,5}MnO₃ mit 500 mg Quarzsand vermischt und die Reaktion bei einem Strom von 35 ml (802 ppm CO in Syntheseluft) je Minute strömen lassen. Eine Aktivierung des Pulvers erfolgte nicht.

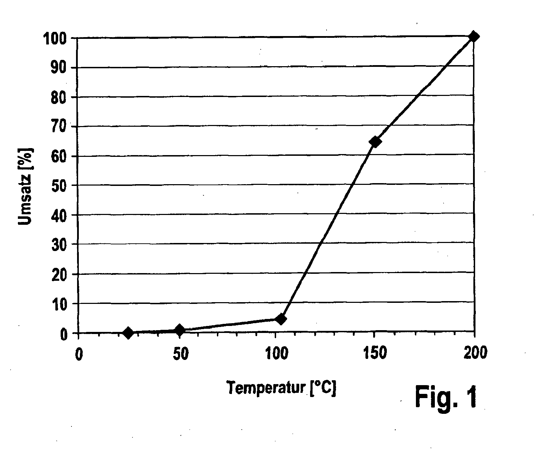

Fig. 1 zeigt, dass schon bei einer Temperatur von 150°C ein CO-Umsatz von ca. 66% erzielt wurde. Ein vollständiger Umsatz des CO wurde schon bei einer Temperatur von 200°C erzielt.

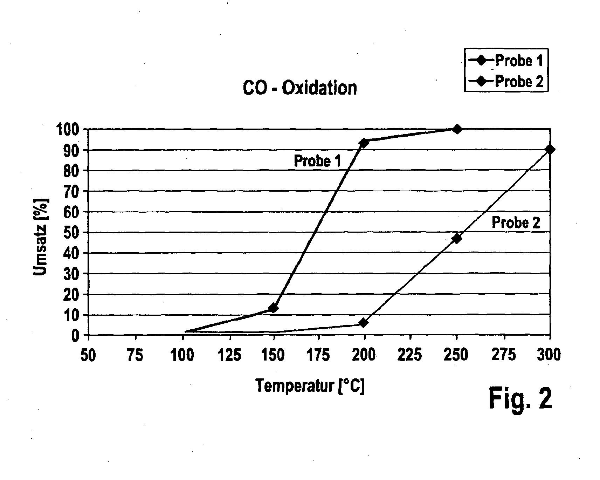

Demgegenüber zeigt Fig. 2 den Umsatz von CO über zwei Proben von mittels des Hydroxidverfahrens erhaltenen La_{0,5}Sr_{0,5}MnO₃.

Wie der Kurve von Probe 1 entnommen werden kann, wurde bei einer Temperatur von 150°C, ein Umsatz von ca. 13% CO beobachtet. Bei einer Temperatur von ca. 200°C wurden 90% CO umgesetzt und erst bei einer Temperatur von 250°C wurde ein 100%iger Umsatz erhalten.

Die andere Probe (Probe 2) zeige noch schlechtere Werte. Der Vergleich zeigt ebenso, dass bei der klassischen Hydroxidfällung nicht zuverlässig Produkte mit einheitlichen Eigenschaften erhalten werden, was mit dem erfindungsgemäßen Verfahren zuverlässig möglich ist.

Der Vergleich zwischen den beiden Materialien zeigt die verbesserte katalytische Aktivität der mittels des erfindungsgemäßen Verfahrens erhaltenen nanokristallinen Gemischtoxide.

## Patentansprüche

1. Verfahren zur Herstellung nanokristalliner gemischter Metalloxidpartikel aus mindestens zwei unterschiedlichen Ausgangsverbindungen, umfassend die Schritte
a) des Einbringens einer stöchiometrischen Mischung der Ausgangsverbindungen in eine Reaktionskammer mittels eines Trägerfluids,
b) des Unterwerfens der Ausgangsverbindungen in einer Behandlungszone unter einem Puls in der Reaktionskammer unter eine pulsierend einwirkende thermische Behandlung,
c) des Bildens von nanokristallinen gemischten Metalloxidpartikeln,
d) des Ausbringens der in Schritt b) und c) erhaltenen nanokristallinen gemischten Metalloxidpartikel aus dem Reaktor,
**dadurch gekennzeichnet, dass** das Herstellen der stöchiometrischen Mischung der Ausgangsverbindungen bei einer Temperatur von > 50°C erfolgt, und dass die stöchiometrische Mischung der Ausgangsverbindungen in Form einer Lösung, Aufschlämmung, Suspension oder in festem Aggregatszustand in die Reaktionskammer eingebracht wird.

2. Verfahren nach Anspruch 1, **dadurch gekennzeichnet, dass** die gemischten Metalloxide ausgewählt sind aus den Strukturklassen der Perowskite, Ilmenite und Spinelle.

3. Verfahren nach Anspruch 1 oder 2, **dadurch gekennzeichnet, dass** das Trägerfluid ein Gas ist.

4. Verfahren nach einem der Ansprüche 1 bis 3, **dadurch gekennzeichnet, dass** die stöchiometrische Mischung der Ausgangsverbindung in Form einer wässrigen Lösung in die Reaktionskammer eingebracht wird.

5. Verfahren nach einem der vorhergehenden Ansprüche, **dadurch gekennzeichnet, dass** zusätzlich Zitronensäure oder ein Zitronensäurensalz in die Mischung der Ausgangsverbindungen eingebracht wird.

6. Verfahren nach Anspruch 4 oder 5, **dadurch gekennzeichnet, dass** die Mischung der Ausgangsverbindungen in verdüster Form in die Reaktionskammer eingebracht wird.

7. Verfahren nach Anspruch 6, **dadurch gekennzeichnet, dass** die Pulsation der pulsierenden thermischen Behandlung regelmäßig oder unregelmäßig erfolgt.

8. Verfahren nach einem der vorhergehenden Ansprüche, **dadurch gekennzeichnet, dass** nach der thermischen Behandlung in der Behandlungszone die entstandenen nanokristallinen gemischten Metalloxidpartikel in eine kältere Zone der Reaktionskammer überführt werden.

9. Verfahren nach Anspruch 8, **dadurch gekennzeichnet, dass** die thermische Behandlung in einem Temperaturbereich von 300 bis 700°C durchgeführt wird.

10. Verfahren nach Anspruch 9, **dadurch gekennzeichnet, dass** das Verfahren bei einem Druck zwischen 15 und 40 bar durchgeführt wird.

## Claims

1. Process for preparing nanocrystalline mixed metal oxide particles from at least two different starting compounds, which comprises the steps of
a) introduction of a stoichiometric mixture of the starting compounds into a reaction chamber by means of a carrier fluid,
b) treatment of the starting compounds by means of a pulsating thermal treatment in a treatment zone under a pulse in the reaction chamber,
c) formation of nanocrystalline mixed metal oxide particles,
d) discharge of the nanocrystalline mixed metal oxide particles obtained in step b) and c) from the reactor,
**characterized in that** the preparation of the stoichiometric mixture of the starting compounds is carried out at a temperature of >50°C and **in that** the stoichiometric mixture of the starting compounds is introduced in the form of a solution, slurry, suspension or in the solid state into the reaction chamber.

2. Process according to Claim 1, **characterized in that** the mixed metal oxides are selected from among the structure classes of perovskites, ilmenites and spinels.

3. Process according to Claim 1 or 2, **characterized in that** the carrier fluid is a gas.

4. Process according to any of Claims 1 to 3, **characterized in that** the stoichiometric mixture of the starting compound is introduced in the form of an aqueous solution into the reaction chamber.

5. Process according to any of the preceding claims, **characterized in that** citric acid or a citric acid salt is additionally introduced into the mixture of the starting compounds.

6. Process according to Claim 4 or 5, **characterized in that** the mixture of the starting compounds is introduced in atomized form into the reaction chamber.

7. Process according to Claim 6, **characterized in that** the pulsation of the pulsating thermal treatment is regular or irregular.

8. Process according to any of the preceding claims, **characterized in that**, after the thermal treatment in the treatment zone, the nanocrystalline mixed metal oxide particles formed are transferred into a colder zone of the reaction chamber.

9. Process according to Claim 8, **characterized in that** the thermal treatment is carried out in a temperature range from 300 to 700°C.

10. Process according to Claim 9, **characterized in that** the process is carried out at a pressure in the range from 15 to 40 bar.

## Revendications

1. Procédé pour la production de particules nanocristallines d'oxydes métalliques mixtes à partir d'au moins deux composés de départ différents, comprenant les étapes consistant à
a) introduire un mélange stoechiométrique des composés de départ dans une chambre de réaction au moyen d'un fluide support,
b) soumettre les composés de départ, dans une zone de traitement dans la chambre de réaction sous une pulsation, à un traitement thermique agissant de manière pulsée,
c) former des particules nanocristallines d'oxydes métalliques mixtes,
d) évacuer, du réacteur, les particules nanocristallines d'oxydes métalliques mixtes obtenues dans l'étape b) et l'étape c),
**caractérisé en ce que** la préparation du mélange stoechiométrique des composés de départ a lieu à une température > 50°C et **en ce que** le mélange stoechiométrique des composés de départ est introduit dans la chambre de réaction sous forme d'une solution, d'une pâte, d'une suspension ou dans un état physique solide.

2. Procédé selon la revendication 1, **caractérisé en ce que** les oxydes métalliques mixtes sont choisis parmi les classes de structure des pérovskites, des ilménites et des spinelles.

3. Procédé selon la revendication 1 ou 2, **caractérisé en ce que** le fluide support est un gaz.

4. Procédé selon l'une quelconque des revendications 1 à 3, **caractérisé en ce que** le mélange stoechiométrique du composé de départ est introduit dans la chambre de réaction sous forme d'une solution aqueuse.

5. Procédé selon l'une quelconque des revendications précédentes, **caractérisé en ce que** de l'acide citrique ou un sel de l'acide citrique est introduit en plus dans le mélange des composés de départ.

6. Procédé selon la revendication 4 ou 5, **caractérisé en ce que** le mélange des composés de départ est introduit sous forme atomisée dans la chambre de réaction.

7. Procédé selon la revendication 6, **caractérisé en ce que** la pulsation du traitement thermique pulsé a lieu de manière régulière ou irrégulière.

8. Procédé selon l'une quelconque des revendications précédentes, **caractérisé en ce qu'**après le traitement thermique dans la zone de traitement, les particules nanocristallines formées d'oxydes métalliques mixtes sont transférées dans une zone plus froide de la chambre de réaction.

9. Procédé selon la revendication 8, **caractérisé en ce que** le traitement thermique est réalisé dans une plage de température de 300 à 700°C.

10. Procédé selon la revendication 9, **caractérisé en ce que** le procédé est réalisé à une pression comprise entre 15 et 40 bars.
